# EUROPEAN PATENT SPECIFICATION

(11) **EP 3 786 099 B1**
(45) Date of publication and mention of the grant of the patent: **12.02.2025**
(21) Application number: 19792168.7
(22) Date of filing: 27.03.2019
(51) Int. Cl.: B66C 13/16, G01V 5/00, B66C 13/46, B66C 19/02, G01V 5/22, B66C 19/00

(54) **CONTAINER INSPECTION SYSTEM, PORT FACILITY, AND CONTAINER INSPECTION METHOD**
BEHÄLTERINSPEKTIONSSYSTEM, AUSGANGSEINRICHTUNG UND BEHÄLTERINSPEKTIONSVERFAHREN
SYSTÈME D'INSPECTION DE CONTENEUR, INSTALLATION DE PORT ET PROCÉDÉ D'INSPECTION DE CONTENEUR

(30) Priority: 25.04.2018 CN 201810377420
(43) Date of publication of application: 03.03.2021
(73) Proprietor: Nuctech Company Limited, TongFang Building Shuangqinglu Haidian District Beijing 100084 (CN)
(72) Inventor: ZONG, Chunguang, Beijing 100084 (CN); GUO, Yiwei, Beijing 100084 (CN); SHI, Junping, Beijing 100084 (CN); MENG, Hui, Beijing 100084 (CN); SONG, Quanwei, Beijing 100084 (CN); SUN, Shangmin, Beijing 100084 (CN); LI, Jianmin, Beijing 100084 (CN); GU, Jingyu, Beijing 100084 (CN); LI, Ying, Beijing 100084 (CN); HU, Yu, Beijing 100084 (CN); LI, Yuanjing, Beijing 100084 (CN); CHEN, Zhiqiang, Beijing 100084 (CN)
(74) Representative: Meissner Bolte Partnerschaft mbB
(86) International application number: PCT/CN2019/079903
(87) International publication number: WO 2019/205873

(56) References cited:
- WO-A1-2004/022474
- CN-A- 1 602 280
- CN-A- 1 731 161
- CN-A- 1 764 584
- CN-A- 1 867 484
- CN-A- 108 373 108
- CN-U- 208 361 733
- GB-A- 2 491 299
- US-A1- 2005 011 849
- US-A1- 2005 011 849
- US-A1- 2006 042 397
- US-A1- 2008 219 804

## Description

### A. CROSS REFERENCE TO RELATED APPLICATIONS

The present application is based on and claims priority to Chinese patent application No. 201810377420.X, filed on April 25 2018.

### B. FIELD

The present disclosure relates to the field of scanning inspection technology, in particular to a container inspection system, a port facility, and a container inspection method.

### C. BACKGROUND

With the development of the vessel industry, the workload of container loading and unloading operations is increasing. As large equipment for loading and unloading containers, quay cranes are increasingly used in various ports to achieve automated loading and unloading.

To prevent prohibited cargo from entering the territory through ports and ensure the safety of cargo in circulation, scanning inspection is usually performed on containers after cargo is unloaded. At present, generally after a container is unloaded by using a quay crane, the container is transported by an AGV transfer trolley (or container transport truck) in a yard to a designated location to perform scanning inspection on the container. This requires a special area for scanning inspection at the port. Not only is a large space occupied, but also long time is consumed, and the circulation efficiency of the container at the port is low. Besides, dangerous prohibited articles may enter the yard, causing potential safety hazards.

US20060042397A1 relates to a crane equipped with an inspection device that can maintain excellent inspection conditions without decreasing cargo transporting efficiency. On a container transporting route of a quay crane, a truck (position adjustment device), is provided moveably in a direction across this transporting route. An inspection device, which inspects the container, is provided on this truck. An upper part frame, which projects above the inspection device, and a lower part frame, which projects under the inspection device, are provided on the truck. An upside position detector, which detects the relative position of the container and the inspection device in the direction of movement of the truck, is provided in a position higher than that of the inspection device of the upper frame. A control device is provided, which controls operation of the position adjustment device based on detection results of the upside position detector so that the inspection device and the container are positioned appropriately for inspection. This document thus discloses a container inspection system, comprising:a quay crane, comprising:an inspection platform; and a hoisting component, for hoisting and transporting a container to the inspection platform;a sensor, disposed on the inspection platform, for detecting whether the container arrives at the inspection platform; and an inspection device, disposed on the inspection platform, for performing scanning inspection on the container arriving at the inspection platform; wherein the inspection device comprises: an installation base disposed on the inspection platform;an L-shaped arm with one end mounted on the installation base, and the other end being a free end, the L-shaped arm and the installation base forming a frame with an opening underneath; a ray source mounted on the installation base; and a detector mounted on the L-shaped arm.

US20080219804A1 relates to a crane apparatus installed on a pier, wharf, bulkhead wharf or other foundation directly transshipping containers from a vessel moored alongside the foundation to another transportation mode without ground placement of the containers. The crane apparatus includes a parent crane displaceable along the foundation for unloading containers from the vessel and placing them on a first platform of the parent crane, and a sibling crane displaceable along the foundation independently of displacement of the parent crane for loading containers from the first platform directly onto over-the-ground vehicles or onto another vessel moored alongside the foundation. The parent crane has a first trolley-hoist-spreader movable along an outreach boom for unloading containers from the vessel and placing them on either the first platform or a second platform of the parent crane, and a second trolley-hoist-spreader movable along a backreach boom for loading containers from the second platform onto another vessel or onto over-the-ground vehicles. A container security scanning system may be provided on the second platform for scanning the containers while on the second platform to determine whether one or more preselected chemical, biological, explosive or nuclear materials are present in the containers.

GB2491299A relates to a crane comprising support means arranged to support a load and to move the load along a path, and a scanner comprising a radiation source and radiation detection means arranged to scan a scanning volume. The path is arranged to pass through the scanning volume so that the scanner can scan the load as it moves along the path. It further includes load monitoring means arranged to determine if the load is in the scanning volume so that the source can be activated or deactivated accordingly. Furthermore, a control means determines the speed and position of the load and consequently controls the pulse frequency of the source.

US20050011849A1 relates to a crane apparatus equipped with a container security scanning system for scanning containers for radioactive material, such as neutron or gamma ray emissions. The crane apparatus has a crane for unloading containers from a marine vessel and placing the containers on a deck located at the portal girder level of the crane and for transferring the containers from the deck to another location. The container security scanning system comprises one or more scanning units disposed on the deck, each scanning unit having one or more scanning platforms for supporting a container such that a bottom of the container is vertically spaced from the deck. A scanning device is movable beneath the container in a space between the underside of the scanning platforms and the deck for scanning the container to detect whether radioactive material is present. Existing cranes can be retrofitted with the container security scanning system, and newly manufactured cranes can be upgraded to include such a system.

WO2004022474A1 relates to a gantry crane used for the operation of loading containers onto a vessel or the operation of unloading containers from a vessel. It is an object of the present invention to provide a gantry crane which makes it possible to minimize the distance of movement of an operator, to drastically increase the speed of loading or unloading operation of containers and to minimize the number of stevedores who work on land, thereby improving the safety of loading or unloading operation. According to the present invention, a gantry crane provided with the trolley and operator's cab which are separately constructed and independently driven, and at least one container loading/unloading terminal provided at intermediate portions of the posts is disclosed.

It should be noted that the information disclosed in the background section of the present disclosure is only intended to enhance understanding of the general background of the present disclosure, and should not be considered as an admission or any form of implication that the information constitutes related technology well known to those skilled in the art.

### D. SUMMARY

Embodiments of the present disclosure propose a container inspection system, a port facility, and a container inspection method, to increase the container circulation efficiency, reduce a floor area occupied by an inspection system and improve the safety in a yard, as much as possible.

According to an example which does not form part of the claimed invention, a container inspection system is provided, including:
a quay crane provided with an inspection platform, a hoisting component of the quay crane being configured to hoist and transport a container and place the container to the inspection platform;
a sensor disposed on the inspection platform, for detecting whether the container is in place; and
an inspection device disposed on the inspection platform, the inspection device moving relative to the container to perform scanning inspection on the container.

The inspection platform is provided with an inspection station and a temporary storage station, wherein the inspection station is configured to receive the container hoisted and transported by the hoisting component, and the temporary storage station is configured to temporarily store the container on which scanning inspection is completed; and the inspection station is disposed on a side close to an initial storage location of the container, and the temporary storage station is disposed on a side away from the initial storage location of the container.

The inspection device includes:
an installation base disposed on the inspection platform;
an L-shaped arm with one end mounted on the installation base, and the other end being a free end, the L-shaped arm and the installation base forming a frame with an opening underneath;
a ray source mounted on the installation base; and
a detector mounted on the L-shaped arm.

The installation base is disposed on a side of the inspection station away from the temporary storage station, and a vertical portion of the L-shaped arm is disposed on a side of the inspection station close to the temporary storage station.

According to the invention, a container inspection system includes:
a quay crane, including:
an inspection platform; and
a hoisting component for hoisting a container and transporting the container to the inspection platform;
a sensor disposed on the inspection platform, for detecting whether the container arrives at the inspection platform; and
an inspection device disposed on the inspection platform, for performing scanning inspection on the container arriving at the inspection platform.

The inspection platform is provided with an inspection station and a temporary storage station, the inspection station being configured to receive the container hoisted and transported by the hoisting component, the inspection device being configured to perform scanning inspection on the container arriving at the inspection station; and the temporary storage station being configured to temporarily store the container on which scanning inspection is completed.

According to another aspect of the present disclosure, the present disclosure further provides a port facility, which includes the above-mentioned container inspection system.

According to yet another aspect of the present disclosure, the present disclosure further provides a container inspection method, including:
hoisting and transporting, by a hoisting component of a quay crane, a first container to an inspection platform disposed on the quay crane; and
detecting whether the first container is in place; and
after detecting the first container is in place, driving an inspection device disposed on the inspection platform to move relative to the first container to perform scanning inspection on the first container.

Further, before hoisting and transporting, by a hoisting component of a quay crane, a first container to an inspection platform disposed on the quay crane, the container inspection method further includes:
detecting an inspection station on the inspection platform to determine whether the inspection station is in an idle state;
if yes, placing the first container onto the inspection station; and
if not, waiting until the inspection station is determined to be in the idle state.

In some embodiments, the container inspection method further includes:
after hoisting and transporting the first container to the inspection platform, detaching the hoisting component from the first container; and
during the scanning inspection on the first container by the inspection device, hoisting and transporting a second container by the hoisting component.

In some embodiments, the container inspection method further includes:
hoisting the first container and transporting the first container to the inspection station of the inspection platform, and performing scanning inspection on the first container on the inspection station;
after the scanning inspection on the first container is completed, transferring the first container to a temporary storage station of the inspection platform.

In some embodiments, the container inspection method further includes:
after transferring the first container to the temporary storage station, placing, a second container hoisted and transported by the hoisting component during the scanning inspection on the first container by the inspection device, onto the inspection station;
detecting whether the second container is in place; and
after detecting the second container is in place, driving the inspection device to move relative to the second container to perform scanning inspection on the second container.

In some embodiments, the container inspection method further includes:
after placing the second container onto the inspection station, detaching the hoisting component from the second container; and
during the scanning inspection on the second container, hoisting and transporting the first container on the temporary storage station by the hoisting component to a container transporting equipment.

In some embodiments, the container inspection method further includes:
after hoisting and transporting the first container to a container transporting equipment, hoisting a third container by the hoisting component, and after the scanning inspection on the second container is completed and the second container is transferred to the temporary storage station, placing the third container onto the inspection station.

In some embodiments, the container inspection method further includes:
before the first container is hoisted and transported to the inspection platform, a guide mechanism disposed on the inspection platform is raised, to guide the first container to fall by the guide mechanism during the placement of the first container onto the inspection platform.

In some embodiments, the container inspection method further includes:
before the first container is transferred to the temporary storage station, the guide mechanism disposed on the inspection station is dropped, to enable the first container to be translated to the temporary storage station.

In some embodiments, after the scanning inspection on the first container is completed, the inspection device returns to an original location, so that a movement direction of the inspection device during the scanning inspecting on the second container is same as a movement direction thereof during the scanning inspection on the first container; or
after the scanning inspection on the first container is completed, the inspection device keep stationary, so that a movement direction of the inspection device during the scanning inspecting on the second container is opposite to a movement direction thereof during the scanning inspection on the first container.

In some embodiments, a container inspection method includes:
hoisting and transporting, by a hoisting component of a quay crane, a first container to an inspection platform disposed on the quay crane; and
detecting whether the first container arrives at the inspection platform; and
after detecting the first container arrives at the inspection platform, driving an inspection device disposed on the inspection platform to move relative to the first container to perform scanning inspection on the first container arriving at the inspection platform.

Further, before hoisting and transporting, by a hoisting component of a quay crane, a first container to an inspection platform disposed on the quay crane, the container inspection method further includes:
detecting whether the inspection platform is empty;
if yes, placing the first container onto the inspection platform; and
if not, waiting until the inspection platform is determined to be empty.

In some embodiments, after hoisting and transporting, by a hoisting component of a quay crane, a first container to an inspection platform disposed on the quay crane, the container inspection method further includes:
detaching the hoisting component from the first container, and during the scanning inspection on the first container by the inspection device, hoisting and transporting, by the hoisting component, a second container.

In some embodiments, the inspection platform is provided with an inspection station and a temporary storage station, and
hoisting and transporting, by a hoisting component of a quay crane, a first container to an inspection platform disposed on the quay crane includes: hoisting and transporting, by the hoisting component of the quay crane, the first container to the inspection station of the inspection platform disposed on the quay crane;
detecting whether the first container arrives at the inspection platform includes: detecting whether the first container arrives at the inspection station;
after detecting the first container arrives at the inspection platform, driving an inspection device disposed on the inspection platform to move relative to the first container to perform scanning inspection on the first container arriving at the inspection platform includes: after detecting the first container arrives at the inspection station, driving the inspection device disposed on the inspection platform to move relative to the first container to perform scanning inspection on the first container arriving at the inspection station; and
the container inspection method further includes:
   after the scanning inspection on the first container is completed, transferring the first container from the inspection station to the temporary storage station.

In some embodiments, after transferring the first container from the inspection station to the temporary storage station, the container inspection method further includes:
placing, by the hoisting component, a second container hoisted and transported during the scanning inspection on the first container by the inspection device, onto the inspection station;
detecting whether the second container arrives at the inspection station; and
after detecting the second container arrives at the inspection station, driving the inspection device to move relative to the second container to perform scanning inspection on the second container arriving at the inspection station.

In some embodiments, after placing, by the hoisting component, a second container hoisted and transported during the scanning inspection on the first container by the inspection device, onto the inspection station, the container inspection method further includes:
detaching the hoisting component from the second container, and during the scanning inspection on the second container, hoisting and transporting, by the hoisting component, the first container on the temporary storage station to container transporting equipment.

In some embodiments, after hoisting and transporting the first container on the temporary storage station to the container transporting equipment, the container inspection method further includes:
hoisting, by the hoisting component, a third container, and after the scanning inspection on the second container is completed and the second container is transferred to the temporary storage station, placing the third container onto the inspection station.

In some embodiments, before hoisting and transporting, by a hoisting component of a quay crane, a first container to an inspection platform disposed on the quay crane, the container inspection method further includes:
raising a guide mechanism disposed on the inspection platform, to guide the first container to fall by the guide mechanism during the placement of the first container onto the inspection platform.

In some embodiments, before transferring the first container from the inspection station to the temporary storage station, the container inspection method further includes:
dropping a guide mechanism disposed on the inspection station, to enable the first container to be translated to the temporary storage station.

In some embodiments, a movement direction of the inspection device during the scanning inspecting on the second container is same as or opposite to a movement direction thereof during the scanning inspection on the first container.

Based on the above-mentioned technical solutions, in the embodiments of the inspection system of the present disclosure, by arranging the inspection device on the inspection platform of the quay crane, a floor area occupied by the inspection device may be reduced, and there is no need to reserve a special inspection location for the inspection device in an area outside the quay crane, so that the overall layout of the port is more reasonable; and arranging the inspection device on the inspection platform of the quay crane may also achieve the scanning inspection during the process of unloading the container from a vessel or during the process of loading the container from the ground to a vessel, to avoid in-yard inspection, and the process of transferring the container to an AGV trolley and transporting by the AGV trolley the container to an inspection location is omitted, thereby greatly reducing container loading, unloading and scanning inspection time, shortening the total circulation time of the container at the port, and improving the circulation efficiency; this may also prevent dangerous prohibited articles from entering a yard, and improve the safety; in addition, by providing the sensor to detect whether the container arrives at the inspection platform, reference information may be provided for turning on/off the inspection device, and the accuracy of scanning inspection may also be improved, so that inspection process is more reasonable and smoother.

The port facility and the container inspection method provided by the present disclosure also correspondingly have the above-mentioned beneficial technical effects.

### E. BRIEF DESCRIPTION OF THE DRAWINGS

The drawings described herein are used to provide a further understanding of the present disclosure and form a part of the present application. The illustrative embodiments of the present disclosure and description thereof are used for explaining rather than unduly limiting the present disclosure. In the drawings:
Fig. 1 is a front view of an embodiment of a container inspection system of the present disclosure.
Fig. 2 is a top view of an inspection platform in an embodiment of a container inspection system of the present disclosure.
Fig. 3 is a left view of an embodiment of a container inspection system of the present disclosure.
Fig. 4 is an enlarged view of a part denoted by sign I in Fig. 1.
Fig. 5 is an enlarged view of a part denoted by sign II in Fig. 2.
Fig. 6 is an enlarged view of a part denoted by sign III in Fig. 3.

### Reference numerals:

100. quay crane; 200. inspection device; 300. container;
101. hoisting component; 102. inspection platform; 103. guide cylinder; 104. transfer device;
105. guide rail; 106. inspection station; 107. temporary storage station;
201. installation base; 202. L-shaped arm; 203. ray source.

### F. DETAILED DESCRIPTION OF THE EMBODIMENTS

The technical solutions in the embodiments will be described clearly and completely below in conjunction with the accompanying drawings in the embodiments of the present disclosure. Obviously, the described embodiments are only a part of the embodiments of the present disclosure, and not all the embodiments. Based on the embodiments of the present disclosure, all other embodiments obtained by those of ordinary skill in the art without creative work shall fall within the protection scope of the present disclosure.

In description of the present disclosure, it should be understood that orientation or position relations denoted by the terms "center", "transverse", "longitudinal", "front", "rear", "left", "right", "upper", "lower", "vertical", "horizontal", "top", "bottom", "inner", "outer" and the like are orientation or position relations illustrated based on the drawings, are merely for the convenience of describing the present disclosure and simplifying description, instead of indicating or implying the denoted devices or elements must have specific orientations or be constructed and operated in specific orientations, and thus the terms cannot be understood as limiting the protection scope of the present invention, which is solely defined by the appended claims.

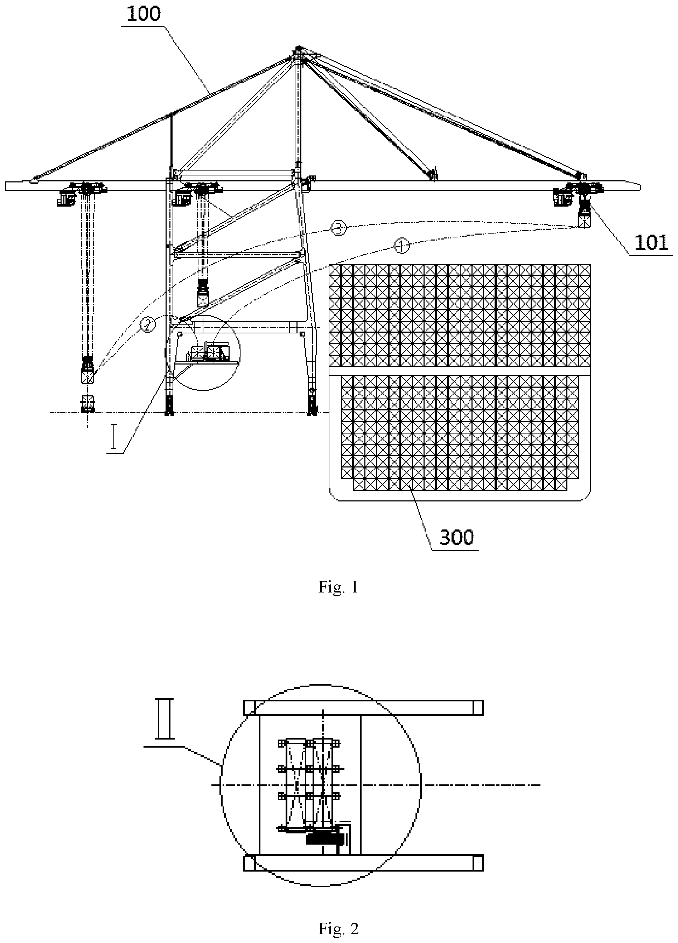

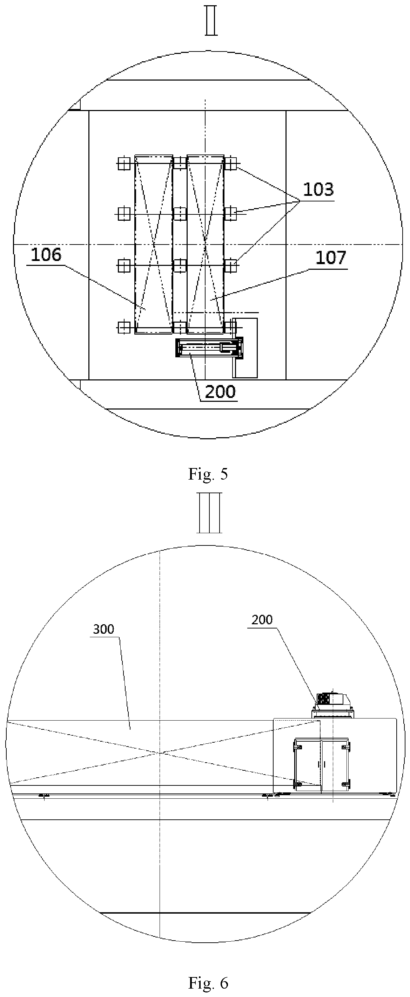

To overcome shortcomings of an inspection system in the related art, the present invention makes improvements on the inspection system. Referring to Figs. 1, 4 and 5, in an illustrative embodiment of a container inspection system provided by the present disclosure, the inspection system includes a quay crane 100, a sensor and an inspection device 200.

The quay crane 100 is provided with an inspection platform 102, and a hoisting component 101 of the quay crane 100 is configured to hoist and transport a container and place the container to the inspection platform 102; the sensor is disposed on the inspection platform 102 and configured to detect whether the container is in place; and the inspection device 200 is disposed on the inspection platform 102, and the inspection device 200 moves relative to the container to perform scanning inspection on the container.

In the above-mentioned illustrative embodiment, by arranging the inspection device 200 on the inspection platform 102 of the quay crane 100, a floor area occupied by the inspection device 200 may be reduced, and there is no need to reserve a special inspection location for the inspection device 200 in an area outside the quay crane 100, so that the overall layout of the port is more reasonable; and arranging the inspection device 200 on the inspection platform 102 of the quay crane 100 may also achieve the scanning inspection during the process of unloading the container 300 from a vessel or during the process of loading the container 300 from the ground to a vessel, to avoid in-yard inspection, and the process of transferring the container 300 to an AGV trolley and transporting by the AGV trolley the container 300 to an inspection location is omitted, thereby greatly reducing container loading, unloading and scanning inspection time, shortening the total circulation time of the container at the port, and improving the circulation efficiency; this may also prevent dangerous prohibited articles from entering a yard, and improve the safety; in addition, by providing the sensor to detect whether the container 300 arrives at the inspection platform 102, reference information may be provided for turning on/off the inspection device 200, and the accuracy of scanning inspection may also be improved, so that inspection process is more reasonable and smoother.

Referring to Figs. 2, 4 and 5, the inspection platform 102 is provided with an inspection station 106 and a temporary storage station 107, the inspection station 106 being configured to receive the container hoisted and transported by the hoisting component 101, the inspection device 200 being configured to perform scanning inspection on the container 300 arriving at the inspection station 106; and the temporary storage station 107 being configured to temporarily store the container on which scanning inspection is completed.

The inspection station 106 is disposed on a side close to an initial storage location of the container, and the temporary storage station 107 is disposed on a side away from the initial storage location of the container.

In the case where the container is unloaded, the initial storage location may be a cargo carrying equipment such as a ship; and in the case where the container is loaded, the initial storage location may be a moving equipment (such as AGV trolley) that transports the container or a storage warehouse that stores the container, or the like.

By providing the inspection station 106, the placement position of the container 300 on the inspection platform 102 may be guided, which facilitates the scanning inspection on the container 300, and improves the efficiency of the scanning inspection.

By providing the temporary storage station 107, the container 300 on which scanning inspection is completed may be moved to the temporary storage station 107 for temporary storage. Even if the container 300 is not timely hoisted and moved away from the temporary storage station 107, scanning of the next container 300 is not affected, and the inspection station 106 may continue to receive the next container 300 and perform scanning inspection work on the next container 300, to achieve the continuity of the scanning inspection work and effectively improve the efficiency of the scanning inspection.

Arranging the inspection station 106 on the side close to the initial storage location of the container 300 may facilitate hoisting and obtaining the container 300 and effectively shorten a moving path of the container 300, and arranging the temporary storage station 107 on the side away from the initial storage location of the container 300 may facilitate hoisting and carrying the container 300 away and effectively shorten the moving path. Such arrangement may prevent the container 300 on the inspection station 106 from interfering with the movement of the container 300 on the temporary storage station 107, and may also prevent the container 300 on the temporary storage station 107 from interfering with the placement of the container 300 on the inspection station 106.

Optionally, the container inspection system includes a plurality of inspection stations 106 and a plurality of temporary storage stations 107, such that the scanning inspection efficiency may be further improved.

As to the arrangement form of the inspection station 106 and the temporary storage station 107, there may be many options. Two optional implementations are given below.

In an optional embodiment, the temporary storage station 107 is arranged on a side of a long edge of the inspection station 106, and a long edge of the temporary storage station 107 and the long edge of the inspection station 106 are parallel to each other. In this arrangement, further optionally, a line connecting the center of the temporary storage station 107 and the center of the inspection station 106, and a short edge of the temporary storage station 107 or the inspection station 106 are parallel to each other.

In another optional embodiment, the temporary storage station 107 is arranged on a side of a short edge of the inspection station 106, and a short edge of the temporary storage station 107 and the short edge of the inspection station 106 are parallel to each other. In this arrangement, further optionally, a line connecting the center of the temporary storage station 107 and the center of the inspection station 106, and a long edge of the temporary storage station 107 or the inspection station 106 are parallel to each other.

The area ranges of the inspection station 106 and the temporary storage station 107 are roughly similar to the shape of the container 300. Generally speaking, the container 300 is in the shape of a cuboid. The long edge of the inspection station 106 and the long edge of the temporary storage station 107 described above are parallel to a length direction of the container 300 (as a first direction), and the short edge of the inspection station 106 and the short edge of the temporary storage station 107 described above are parallel to a width direction of the container 300 (as a second direction).

In the above-mentioned various embodiments, the container 300 may keep stationary, and the scanning inspection is achieved by the movement of the inspection device 200 relative to the container 300. Alternatively, the inspection device 200 keeps stationary, and the scanning inspection is achieved by the movement of the container 300 relative to the inspection device 200.

The inspection device 200 includes an installation base 201, an L-shaped arm 202, a ray source 203 and a detector, wherein the installation base 201 is disposed on the inspection platform 102; one end of the L-shaped arm 202 is mounted on the installation base 201, and the other end of the L-shaped arm 202 is a free end, the L-shaped arm 202 and the installation base 201 forming a frame with an opening underneath, so that the container 300 passes through the opening underneath when the inspection device 200 moves relative to the container 300; the ray source 203 is mounted on the installation base 201; and the detector is mounted on the L-shaped arm 202.

The L-shaped arm 202 includes a horizonal arm and a vertical arm. Optionally, both the horizonal arm and the vertical arm are provided with detectors. The ray source 203 emits a sectorial radiation plane, which intersects the container 300. The detectors on the horizonal arm and the vertical arm receive a ray passing through the container 300 to achieve the scanning inspection on the container 300.

Optionally, the sectorial radiation plane emitted by the ray source 203 is perpendicular to the length direction of the container 300.

Optionally, the inspection device 200 moves relative to the container 300 in the length direction of the container 300. During the scanning inspection, both the ray source 203 and the detectors of the inspection device 200 move relative to the container 300 in the length direction of the container 300.

To facilitate the movement of the inspection device 200 relative to the container 300, the inspection platform 102 is provided with a guide rail 105, and the bottom of the installation base 201 is provided with rollers, which cooperate with the guide rail 105, so that the installation base 201 may move on the inspection platform 102, thereby causing the entire inspection device 200 to move.

Optionally, the container inspection system further includes a drive mechanism, which is configured to drive the inspection device 200 to move relative to the container 300.

The bottom of the installation base 201 is provided with rollers, and when the rollers cooperate with the guide rail 105 provided on the inspection platform 102, the drive mechanism may use a drive element such as a motor or a cylinder to drive the inspection device 200 to move.

In addition, the drive mechanism may also be in the form of an AGV trolley, and the inspection device 200 as a whole is placed on the AGV trolley, and the movement of the AGV trolley drives the inspection device 200 to move.

The installation base 201 is disposed on a side of the inspection station 106 away from the temporary storage station 107, and a vertical portion (i.e. the vertical arm) of the L-shaped arm 202 is disposed on a side of the inspection station 106 close to the temporary storage station 107, and the horizonal arm of the L-shaped arm 202 is disposed above the container 300. As the installation base 201 occupies a large floor space, placing the vertical arm of the L-shaped arm 202 between the inspection station 106 and the temporary storage station 107 may reduce as much as possible the distance between the inspection station 106 and the temporary storage station 107, to facilitate the transfer of the container 300 between the inspection station 106 and the temporary storage station 107.

In the various embodiments of the container inspection system provided by the present disclosure, after the scanning inspection on the container is completed on the inspection platform of the quay crane 100, the container may be hoisted and transported by the hoisting component 101 on the quay crane 100 to a container moving equipment, and the container is transported by the container moving equipment to a target position.

As to the above-mentioned target location, in the case where the container is unloaded from a cargo carrying equipment such as a ship, the target location may be a warehouse for storing containers on the ground of a yard of the port, or may also be a truck for transporting containers, etc.; and in the case where the container is loaded to a cargo carrying equipment such as a ship, the target location may be a storage bin for storing containers on the cargo carrying equipment such as a ship.

In the case where the container is unloaded from a cargo carrying equipment such as a ship, the above-mentioned container moving equipment may be an AGV trolley, a container transport truck or the like; and in the case where the container is loaded to cargo carrying equipment such as a ship, the above-mentioned container moving equipment may be equipment, disposed on the cargo carrying equipment such as a ship, for placing containers to corresponding storage bins.

Optionally, the container inspection system further includes a transfer device 104, the transfer device 104 being disposed on the inspection platform 102 and being configured to transfer the container 300 on the inspection station 106 to the temporary storage station 107. Providing the transfer device 104 may further improve the work efficiency.

The transfer device 104 transfers the container 300 from the inspection station 106 to the temporary storage station 107 and returns to an original location after the container 300 is hoisted and carried away, to prepare for the next transfer.

There may be multiple options for the specific structure of the transfer device 104. For example, it may be a transfer trolley used in combination with a rail to facilitate the movement of the container 300 between different stations; or it may also be a roller, belt or chain transmission mechanism, etc.

Based on the above-mentioned container inspection system, the present disclosure further proposes a port facility, which includes the above-mentioned container inspection system.

The positive technical effects of the container inspection system in the various embodiments described above are also applicable to the port facility and are not repeated here.

The present disclosure further proposes a container inspection method. In an optional embodiment, the container inspection method includes:
hoisting and transporting, by a hoisting component 101 of a quay crane 100, a first container 300 to an inspection platform 102 disposed on the quay crane 100;
detecting whether the first container 300 is in place; and
after detecting the first container 300 is in place, driving an inspection device 200 disposed on the inspection platform 102 to move relative to the first container 300 to perform scanning inspection on the first container 300.

According to the invention, the quay crane 100 is provided with the inspection platform 102, and the inspection device 200 performs scanning inspection on the container, on the inspection platform 102; that is, the scanning on the container is performed during the process that the quay crane 100 transfers the container from cargo carrying equipment such as a ship to a yard of the port, or loads the container from a yard to cargo carrying equipment such as a ship; this may omit the process of first transferring the container from cargo carrying equipment such as a ship to an AGV trolley and then transporting by the AGV trolley the container to a special scanning inspection location in a yard, or first performing scanning inspection on the container at a special scanning inspection location in a yard, then transporting by an AGV trolley the container to the vicinity of the quay crane 100, and then loading by the quay crane 100 the container to cargo carrying equipment such as a ship, thereby greatly shortening the circulation time of the container at the port, and improving the circulation efficiency; this may also reduce a floor area occupied by the inspection device, prevent dangerous prohibited articles from entering a yard, and improve the safety; and by detecting whether the container is in place, reference information may be provided for turning on/off the inspection device, and the accuracy of scanning inspection may also be improved, so that inspection process is more reasonable and smoother.

Further, before hoisting and transporting, by a hoisting component 101 of a quay crane 100, a first container 300 to an inspection platform 102 disposed on the quay crane 100, the container inspection method further includes:
detecting an inspection station 106 on the inspection platform 102 to determine whether the inspection station 106 is empty;
if yes, placing the first container onto the inspection station 106; and
if not, waiting until the inspection station 106 is determined to be empty.

Adding the step of determining whether the inspection station 106 is empty may ensure the safety of the operation process, and avoid a collision risk or scanning failure caused by two containers falling in place on the inspection station 106 at the same time.

Optionally, the container inspection method further includes:
after hoisting and transporting the first container 300 to the inspection platform 102, detaching the hoisting component 101 from the first container 300; and
during the scanning inspection on the first container 300 by the inspection device 200, hoisting and transporting, by the hoisting component 101, a second container 300.

With this configuration, the hoisting component 101 may be fully utilized, and the time of scanning inspection on the first container 300 is used to hoist the second container 300, so that the inspection process may be speeded up, and the efficiency of scanning inspection is improved.

Optionally, the container inspection method further includes:
hoisting the first container 300 and transporting the first container 300 to the inspection station 106 of the inspection platform 102, and performing scanning inspection on the first container 300, on the inspection station 106;
after the scanning inspection on the first container 300 is completed, transferring the first container 300 to a temporary storage station 107 of the inspection platform 102.

By providing the inspection station 106 and the temporary storage station 107, the efficiency of the container inspection method may be further improved, and when the hoisting component 101 hoists and transports the second container 300, the first container 300 on which scanning inspection is completed may be moved to the temporary storage station 107 for storage, and at the same time the inspection station 106 is vacated to provide a vacant space for the second container 300.

Further, the container inspection method further includes:
after transferring the first container 300 to the temporary storage station 107, placing, by the hoisting component 101, a second container 300 hoisted and transported during the scanning inspection on the first container 300 by the inspection device 200, onto the inspection station 106;
detecting whether the second container 300 is in place; and
after detecting the second container 300 is in place, driving the inspection device 200 to move relative to the second container 300 to perform scanning inspection on the second container 300.

After the second container 300 falls in place on the inspection station 106, scanning inspection is performed on the second container 300, a scanning inspection process of which is same as the scanning inspection process of the first container 300.

Further, the container inspection method further includes:
after placing the second container 300 onto the inspection station 106, detaching the hoisting component 101 from the second container 300; and
during the scanning inspection on the second container 300, hoisting and transporting, by the hoisting component 101, the first container 300 on the temporary storage station 107 to container transporting equipment.

Using the time of scanning inspection on the second container 300, the hoisting component 101 hoists and moves away the first container 300, thereby further fully utilizing the hoisting component 101, so that the scanning inspection process is more compact, and the efficiency of scanning inspection is greatly improved.

Optionally, the container inspection method further includes:
after hoisting and transporting the first container 300 to the container transporting equipment, hoisting a third container 300 by the hoisting component 101, and after the scanning inspection on the second container 300 is completed and the second container is transferred to the temporary storage station 107, placing the third container 300 onto the inspection station 106. Then, scanning inspection on the third container 300 is started, and the process proceeds in this way, so that scanning inspection on multiple containers may be accomplished, the inspection process is compact and the inspection effect is high.

Before the first container 300 is hoisted and transported to the inspection platform 102, a guide mechanism disposed on the inspection platform 102 may be raised, to guide the first container 300 to fall by the guide mechanism during the placement of the first container 300 onto the inspection platform 102. By providing the guide mechanism, the container may fall accurately; it may also limit the container 300 to prevent the container 300 from deviating from the inspection station 106 or the temporary storage station 107, and ensure the container 300 may be accurately hoisted every time after the hoisting component 101 falls, thereby reducing the alignment time and improving the circulation efficiency.

Further, before the first container 300 is transferred to the temporary storage station 107, the guide mechanism disposed on the inspection station 106 may be dropped, to enable the first container 300 to be translated to the temporary storage station 107. The guide mechanism may be configured to be a liftable structure, which may be raised or dropped with the fall or transfer of the container and may achieve a guiding and positioning function without affecting the transfer.

Optionally, the guide mechanism includes a plurality of guide cylinders 103, the guide cylinders 103 being arranged along edges of the inspection station 106 on the inspection platform 102, such that the container 300 may be guided and positioned by the guide cylinders 103. The tops of the guide cylinders 103 are cone-shaped, so that the container 300 may be better guided to fall quickly and accurately. The temporary storage station 107 on the inspection platform 102 may also be provided with guide cylinders 103 to limit the container 300.

In addition, after the scanning inspection on the first container 300 is completed, the inspection device 200 may return to an original location, so that a movement direction of the inspection device 200 during the scanning inspecting on the second container 300 is same as a movement direction thereof during the scanning inspection on the first container 300; or
after the scanning inspection on the first container 300 is completed, the inspection device 200 may also keep stationary, so that a movement direction of the inspection device 200 during the scanning inspecting on the second container 300 is opposite to a movement direction thereof during the scanning inspection on the first container 300.

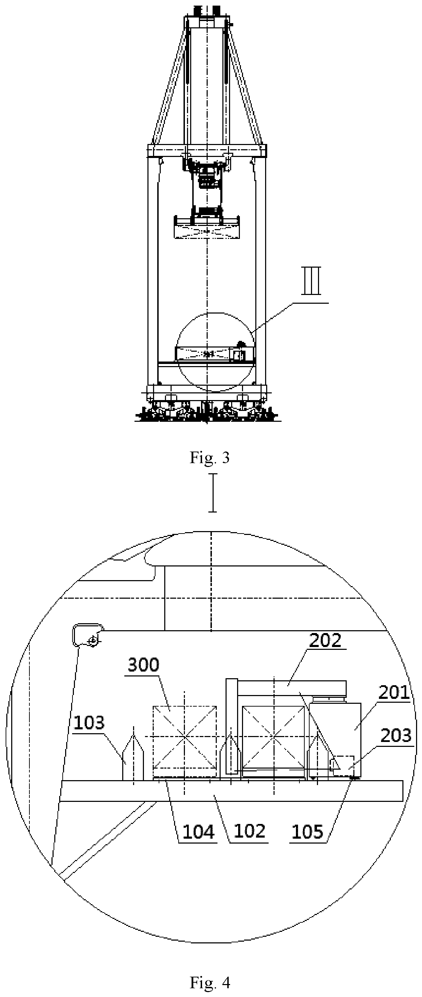

A working process of an embodiment of the container inspection system, the port facility, and the container inspection method of the present disclosure will be described below in conjunction with Figs. 1-6:
As shown in Figs. 1-3, when the inspection station 106 preset on the inspection platform 102 of the quay crane 100 is determined to be empty, the hoisting component 101 of the quay crane 100 hoists and transports the first container 300 on a ship to the inspection station 106, and after a sensor disposed on the inspection station 106 detects that the first container 300 falls in place and is stable, the hoisting component 101 unloads and is detached from the first container 300, and then returns to the ship to hoist the second container 300; after the inspection device 200 receives a signal indicating the first container 300 falls in place on the inspection station 106, the inspection device 200 starts an scanning operation, and inspection device 200 moves relative to the first container 300; and after the scanning operation is completed, as shown in Figs. 4-6, a transfer device 104 transfers the first container 300 to the temporary storage station 107, and the inspection station 106 is empty at that time;
during the operation of the inspection device 200, the hoisting component 101 of the quay crane 100 hoists the second container 300 from the ship and transfers the second container 300 to the inspection station 106, and as the scanning inspection on the first container 300 previously on the inspection station 106 is completed and the first container 300 is transferred to the temporary storage station 107, the inspection station 106 is empty, and the hoisting component 101 may put the second container 300 in place on the inspection station 106; then after the inspection device 200 receives a signal indicating the second container 300 falls in place on the inspection station 106, the inspection device 200 starts to perform scanning inspection on the second container 300; at the same time, after the second container 300 falls in place, the hoisting component 101 is detached from the second container 300, and hoists the previous first container 300 (on the temporary storage station 107 at that time) and transports the first container 300 to an AGV trolley, and the first container 300 is directly transported by the AGV trolley to a container storage warehouse or carrying vehicle; after the hoisting component 101 transports the first container 300 to the container storage warehouse or carrying vehicle, the hoisting component 101 may continue to hoist the third container 300, and after the scanning inspection on the second container 300 is completed and the second container is transferred to the temporary storage station 107, the third container 300 is hoisted and transported to the inspection station 106, and the process proceeds in this way, so that continuous scanning inspection on multiple containers may be accomplished.

In this embodiment, continuous scanning inspection on multiple containers may be efficiently achieved by at least one hoisting component, and this is applicable to a quay crane with one or more hoisting components, and has a wide range of applications. Of course, in other embodiments, scanning inspection on multiple containers may also be achieved by two or more hoisting components.

From the description of multiple embodiments of the container inspection system, the port facility, and the container inspection method of the present disclosure, it can be seen the embodiments of the container inspection system, the port facility, and the container inspection method of the present disclosure have at least one or more of the following advantages:
1. the inspection device is disposed on the quay crane, and performs scanning inspection during loading or unloading of the container, so that in-yard inspection may be avoided, thereby simplifying the process, reducing the loading, unloading and scanning time, shortening the total circulation time of the container at the port, and improving the circulation efficiency;
2. by arranging the inspection device on the quay crane, a floor area may also be saved, and there is no need to reserve a special inspection location in an area outside the quay crane, so that the overall layout of the port is more reasonable;
3. inspection is performed before the container enters a yard, so that dangerous prohibited articles are effectively prevented from entering the yard, and the safety is improved;
4. by providing the sensor to detect whether the container is in place, the accuracy of inspection is effectively improved, and reference is provided for turning on/off the inspection device;
5. the inspection station on the inspection platform is closer to the initial storage location of the container, and the temporary storage station is closer to the target location of the container, so that a transfer path may be effectively shortened, and interference between containers at different stations is avoided; and
6. continuous scanning inspection on multiple containers may be efficiently achieved by at least one hoisting component, so the applicability is high.

Described above are preferred implementations of the present disclosure, and it should be noted that to those of ordinary skill in the art, a number of improvements and modifications may also be made without departing from the scope of the appended claims.

## Claims

1. A container inspection system, comprising:
a quay crane (100), comprising:
an inspection platform (102); and
a hoisting component (101), for hoisting and transporting a container (300) and placing the container (300) to the inspection platform (102);
a sensor, disposed on the inspection platform (102), for detecting whether the container (300) arrives at the inspection platform (102); and
an inspection device (200), disposed on the inspection platform (102), for performing scanning inspection on the container (300) arriving at the inspection platform (102);
wherein the inspection platform (102) is provided with an inspection station (106) and a temporary storage station (107), the inspection station (106) configured to receive the container (300) hoisted and transported by the hoisting component (101), the inspection device (200) being configured to perform scanning inspection on the container (300) arriving at the inspection station (106), and the temporary storage station (107) configured to temporarily store the container (300) on which scanning inspection is completed;
wherein the inspection device (200) comprises:
an installation base (201) disposed on the inspection platform (102);
an L-shaped arm (202) with one end mounted on the installation base (201), and the other end being a free end, the L-shaped arm (202) and the installation base (201) forming a frame with an opening underneath;
a ray source (203) mounted on the installation base (201); and
a detector mounted on the L-shaped arm (202);
wherein the installation base (201) is disposed on a side of the inspection station (106) away from the temporary storage station (107), and a vertical portion of the L-shaped arm (202) is disposed on a side of the inspection station (106) close to the temporary storage station (107).

2. A port facility, comprising the container inspection system of claim 1.

3. A container inspection method employing the container inspection system of claim 1, comprising:
hoisting and transporting, by the hoisting component (101) of the quay crane (100), a first container (300) to the inspection platform (102) disposed on the quay crane (100);
detecting whether the first container (300) arrives at the inspection platform (102) by the sensor; and
after detecting the first container (300) arrives at the inspection platform (102), driving the inspection device (200) disposed on the inspection platform (102) to move relative to the first container (300) to perform scanning inspection on the first container (300) arriving at the inspection platform (102).

4. The container inspection method according to claim 3, wherein before hoisting and transporting, by the hoisting component (101) of a quay crane (100), a first container (300) to the inspection platform (102) disposed on the quay crane (100), the container inspection method further comprises:
detecting whether the inspection platform (102) is empty;
if yes, placing the first container (300) onto the inspection platform (102); and
if not, waiting until the inspection platform (102) is determined to be empty.

5. The container inspection method according to claim 3, wherein after hoisting and transporting, by the hoisting component (101) of the quay crane (100), a first container (300) to the inspection platform (102) disposed on the quay crane (100), the container inspection method further comprises:
detaching the hoisting component (101) from the first container (300), and during the scanning inspection on the first container (300) by the inspection device (200), hoisting and transporting a second container (300) by the hoisting component (101).

6. The container inspection method according to claim 3, wherein
hoisting and transporting, by the hoisting component (101) of the quay crane (100), a first container (300) to the inspection platform (102) disposed on the quay crane (100) comprises: hoisting and transporting, by the hoisting component (101) of the quay crane (100), the first container (300) to the inspection station (106) of the inspection platform (102) disposed on the quay crane (100);
detecting whether the first container (300) arrives at the inspection platform (102) comprises: detecting whether the first container (300) arrives at the inspection station (106);
after detecting the first container (300) arrives at the inspection platform (102), driving the inspection device (200) disposed on the inspection platform (102) to move relative to the first container (300) to perform scanning inspection on the first container (300) arriving at the inspection platform (102) comprises: after detecting the first container (300) arrives at the inspection station (106), driving the inspection device (200) disposed on the inspection platform (102) to move relative to the first container (300) to perform scanning inspection on the first container (300) arriving at the inspection station (106); and
the container inspection method further comprises:
after the scanning inspection on the first container (300) is completed, transferring the first container (300) from the inspection station (106) to the temporary storage station (107).

7. The container inspection method according to claim 6, wherein after transferring the first container (300) from the inspection station (106) to the temporary storage station (107), the container inspection method further comprises:
placing, by the hoisting component (101), a second container (300) hoisted and transported during the scanning inspection on the first container (300) by the inspection device (200), onto the inspection station (106);
detecting whether the second container (300) arrives at the inspection station (106); and
after detecting the second container (300) arrives at the inspection station (106), driving the inspection device (200) to move relative to the second container (300) to perform scanning inspection on the second container (300) arriving at the inspection station (106).

8. The container inspection method according to claim 7, wherein after placing, by the hoisting component (101), a second container (300) hoisted and transported during the scanning inspection on the first container (300) by the inspection device (200), onto the inspection station (106), the container inspection method further comprises:
detaching the hoisting component (101) from the second container (300), and during the scanning inspection on the second container (300), hoisting and transporting, by the hoisting component (101), the first container (300) on the temporary storage station (107) to a container transporting equipment.

9. The container inspection method according to claim 8, wherein after hoisting and transporting the first container (300) on the temporary storage station (107) to a container transporting equipment, the container inspection method further comprises:
hoisting, by the hoisting component (101), a third container (300), and after the scanning inspection on the second container (300) is completed and the second container (300) is transferred to the temporary storage station (107), placing the third container (300) onto the inspection station (106).

10. The container inspection method according to claim 3, wherein before hoisting and transporting, by the hoisting component (101) of the quay crane (100), a first container (300) to the inspection platform (102) disposed on the quay crane (100), the container inspection method further comprises:
raising a guide mechanism disposed on the inspection platform (102), to guide the first container (300) to fall by the guide mechanism during the placement of the first container (300) onto the inspection platform (102).

11. The container inspection method according to claim 6, wherein before transferring the first container (300) from the inspection station (106) to the temporary storage station (107), the container inspection method further comprises:
dropping a guide mechanism disposed on the inspection station (106), to enable the first container (300) to be translated to the temporary storage station (107).

12. The container inspection method according to claim 7, wherein a movement direction of the inspection device (200) during the scanning inspecting on the second container (300) is same as or opposite to a movement direction of the inspection device (200) during the scanning inspection on the first container (300).

## Patentansprüche

1. Ein Container-Inspektionssystem, umfassend:
einen Kaikran (100), umfassend:
eine Inspektionsplattform (102); und eine Hebekomponente (101) zum Heben und Transportieren eines Containers (300) und zum Platzieren des Containers (300) auf der Inspektionsplattform (102);
einen Sensor, der auf der Inspektionsplattform (102) angeordnet ist, um zu erfassen, ob der Container (300) an der Inspektionsplattform (102) ankommt; und
eine Inspektionsvorrichtung (200), die auf der Inspektionsplattform (102) angeordnet ist, um eine Scan-Inspektion an dem an der Inspektionsplattform (102) ankommenden Container (300) durchzuführen;
wobei die Inspektionsplattform (102) mit einer Inspektionsstation (106) und einer Zwischenlagerstation (107) versehen ist, wobei die Inspektionsstation (106) so konfiguriert ist, dass sie den Container (300) aufnimmt, der von der Hebekomponente (101) angehoben und transportiert wird, wobei die Inspektionsvorrichtung (200) so konfiguriert ist, dass sie eine Scan-Inspektion an dem an der Inspektionsstation (106) ankommenden Container (300) durchführt, und die Zwischenlagerstation (107) so konfiguriert ist, dass sie den Container (300), an dem die Scan-Inspektion abgeschlossen ist, vorübergehend lagert;
wobei die Inspektionsvorrichtung (200) eine Installationsbasis (201), die auf der Inspektionsplattform (102) angeordnet ist; einen L-förmigen Arm (202), dessen eines Ende an der Installationsbasis (201) angebracht ist und dessen anderes Ende ein freies Ende ist, wobei der L-förmige Arm (202) und die Installationsbasis (201) einen Rahmen mit einer Öffnung darunter bilden; eine Strahlenquelle (203), die auf der Installationsbasis (201) montiert ist; und einen Detektor, der auf dem L-förmigen Arm (202) montiert ist, umfasst;
wobei die Installationsbasis (201) auf einer Seite der Inspektionsstation (106) entfernt von der Zwischenlagerstation (107) angeordnet ist und ein vertikaler Abschnitt des L-förmigen Arms (202) auf einer Seite der Inspektionsstation (106) nahe der Zwischenlagerstation (107) angeordnet ist.

2. Hafenanlage, umfassend das Container-Inspektionssystem nach Anspruch 1.

3. Verfahren zur Inspektion von Containern unter Verwendung des Container-Inspektionssystems nach Anspruch 1, umfassend:
Heben und Transportieren eines ersten Containers (300) durch die Hebekomponente (101) des Kaikrans (100) zu der auf dem Kaikran (100) angeordneten Inspektionsplattform (102);
Erfassen durch den Sensor, ob der erste Container (300) an der Inspektionsplattform (102) ankommt; und
nachdem erfasst wurde, dass der erste Container (300) an der Inspektionsplattform (102) ankommt, Angetrieben werden der an der Inspektionsplattform (102) angeordneten Inspektionsvorrichtung (200), um sich relativ zu dem ersten Container (300) zu bewegen, um eine Scan-Inspektion an dem ersten Container (300) durchzuführen, der an der Inspektionsplattform (102) ankommt.

4. Verfahren zur Inspektion von Containern nach Anspruch 3, wobei vor dem Heben und Transportieren eines ersten Containers (300) durch die Hebekomponente (101) eines Kaikrans (100) zu der an dem Kaikran (100) angeordneten Inspektionsplattform (102) das Verfahren zur Inspektion von Containern ferner umfasst:
Erfassen, ob die Inspektionsplattform (102) leer ist;
falls ja, Platzieren des ersten Containers (300) auf der Inspektionsplattform (102); und
falls nicht, Warten, bis festgestellt wird, dass die Inspektionsplattform (102) leer ist.

5. Verfahren zur Inspektion von Containern gemäß Anspruch 3, wobei nach dem Heben und Transportieren eines ersten Containers (300) durch die Hebekomponente (101) des Kaikrans (100) zu der auf dem Kaikran (100) angeordneten Inspektionsplattform (102) das Verfahren zur Inspektion von Containern:
das Abnehmen der Hebekomponente (101) von dem ersten Container (300) und während der Scan-Inspektion an dem ersten Container (300) durch die Inspektionsvorrichtung (200) das Heben und Transportieren eines zweiten Containers (300) durch die Hebekomponente (101), ferner umfasst.

6. Verfahren zur Inspektion von Containern nach Anspruch 3, wobei das Heben und Transportieren eines ersten Containers (300) durch die Hebekomponente (101) des Kaikrans (100) zu der auf dem Kaikran (100) angeordneten Inspektionsplattform (102):
Heben und Transportieren des ersten Containers (300) durch die Hebekomponente (101) des Kaikrans (100) zur Inspektionsstation (106) der Inspektionsplattform (102), die auf dem Kaikran (100) angeordnet ist;
Erfassen, ob der erste Container (300) an der Inspektionsplattform (102) ankommt, umfassend: Erfassen, ob der erste Container (300) an der Inspektionsstation (106) ankommt;
nachdem erfasst wurde, dass der erste Container (300) an der Inspektionsplattform (102) ankommt, Angetrieben werden der an der Inspektionsplattform (102) angeordneten Inspektionsvorrichtung (200), um sich relativ zu dem ersten Container (300) zu bewegen, um eine Scan-Inspektion an dem ersten Container (300) durchzuführen, der an der Inspektionsplattform (102) ankommt, umfassend:
nachdem erfasst wurde, dass der erste Container (300) an der Inspektionsstation (106) ankommt, Angetrieben werden der auf der Inspektionsplattform (102) angeordneten Inspektionsvorrichtung (200), um sich relativ zu dem ersten Container (300) zu bewegen, um eine Scan-Inspektion an dem ersten Container (300), durchzuführen, der an der Inspektionsstation (106) ankommt; und das Container-Inspektionsverfahren ferner umfassend:
nachdem die Scan-Inspektion des ersten Containers (300) abgeschlossen ist, Überführen des ersten Containers (300) von der Inspektionsstation (106) zur Zwischenlagerstation (107),
umfasst.

7. Verfahren zur Inspektion von Containern nach Anspruch 6, wobei das Verfahren zur Inspektion von Containern nach dem Überführen des ersten Containers (300) von der Inspektionsstation (106) zur Zwischenlagerstation (107) ferner:
Platzieren eines zweiten Containers (300), der während der Scan-Inspektion an dem ersten Container (300) durch die Inspektionsvorrichtung (200) angehoben und transportiert wurde, durch die Hebekomponente (101) auf der Inspektionsstation (106);
Erfassen, ob der zweite Container (300) an der Inspektionsstation (106) ankommt; und
nachdem erfasst wurde, dass der zweite Container (300) an der Inspektionsstation (106) ankommt, Angetrieben werden der Inspektionsvorrichtung (200), um sich relativ zu dem zweiten Container (300) zu bewegen, um eine Scan-Inspektion an dem zweiten Container (300), der an der Inspektionsstation (106) ankommt, durchzuführen,
umfasst.

8. Verfahren zur Inspektion von Containern nach Anspruch 7, wobei nach dem Platzieren eines zweiten Containers (300), der während der Scan-Inspektion des ersten Containers (300) durch die Inspektionsvorrichtung (200) angehoben und transportiert wurde, durch die Hebekomponente (101) auf der Inspektionsstation (106), das Verfahren zur Inspektion von Containern ferner:
Abtrennen der Hebekomponente (101) von dem zweiten Container (300) und während der Scan-Inspektion an dem zweiten Container (300) Heben und Transportieren des ersten Containers (300) auf der Zwischenlagerstation (107) zu einer Containertransportvorrichtung durch die Hebekomponente (101), umfasst.

9. Verfahren zur Inspektion von Containern nach Anspruch 8, wobei nach dem Heben und Transportieren des ersten Containers (300) auf der Zwischenlagerstation (107) zu einer Containertransportvorrichtung das Verfahren zur Inspektion von Containern ferner:
Heben eines dritten Containers (300) durch die Hebekomponente (101) und, nachdem die Scan-Inspektion des zweiten Containers (300) abgeschlossen ist und der zweite Container (300) zur Zwischenlagerstation (107) transportiert wurde, Platzieren des dritten Containers (300) auf der Inspektionsstation (106), umfasst.

10. Verfahren zur Inspektion von Containern gemäß Anspruch 3, wobei vor dem Heben und Transportieren eines ersten Containers (300) durch die Hebekomponente (101) des Kaikrans (100) zu der auf dem Kaikran (100) angeordneten Inspektionsplattform (102) das Verfahren zur Inspektion von Containern ferner:
Heben eines Führungsmechanismus, der auf der Inspektionsplattform (102) angeordnet ist, um den ersten Container (300) so zu führen, dass er durch den Führungsmechanismus fällt, während der erste Container (300) auf der Inspektionsplattform (102) platziert wird, umfasst.

11. Verfahren zur Inspektion von Containern gemäß Anspruch 6, wobei vor dem Überführen des ersten Containers (300) von der Inspektionsstation (106) zur Zwischenlagerstation (107) das Verfahren zur Inspektion von Containern ferner:
Absenken eines an der Inspektionsstation (106) angeordneten Führungsmechanismus, um eine Verschiebung des ersten Containers (300) zur Zwischenlagerstation (107) zu ermöglichen, umfasst.

12. Verfahren zur Inspektion von Containern nach Anspruch 7, wobei die Bewegungsrichtung der Inspektionsvorrichtung (200) während der Scan-Inspektion des zweiten Containers (300) gleich oder entgegengesetzt zur Bewegungsrichtung der Inspektionsvorrichtung (200) während der Scan-Inspektion des ersten Containers (300) ist.

## Revendications

1. Système d'inspection de conteneur, comprenant :
une grue de quai (100), comprenant :
une plate-forme d'inspection (102) ; et
un composant de levage (101), destiné à lever et à transporter un conteneur (300) et à placer le conteneur (300) jusque sur la plate-forme d'inspection (102) ;
un capteur, disposé sur la plate-forme d'inspection (102), destiné à détecter si le conteneur (300) arrive à la plate-forme d'inspection (102) ; et
un dispositif d'inspection (200), disposé sur la plate-forme d'inspection (102), destiné à effectuer une inspection par balayage sur le conteneur (300) arrivant à la plate-forme d'inspection (102) ;
dans lequel la plate-forme d'inspection (102) est pourvue d'une station d'inspection (106) et d'une station de stockage temporaire (107), la station d'inspection (106) étant configurée pour recevoir le conteneur (300) levé et
transporté par le composant de levage (101), le dispositif d'inspection (200) étant configuré pour effectuer une inspection par balayage sur le conteneur (300) arrivant à la station d'inspection (106), et la station de stockage temporaire (107) étant configurée pour stocker temporairement le conteneur (300) sur lequel l'inspection par balayage est terminée ;
dans lequel le dispositif d'inspection (200) comprend :
une base d'installation (201) disposée sur la plate-forme d'inspection (102) ;
un bras en forme de L (202) avec une extrémité montée sur la base d'installation (201), et l'autre extrémité étant une extrémité libre, le bras en forme de L (202) et la base d'installation (201) formant un châssis avec une ouverture en dessous ;
une source de rayonnement (203) montée sur la base d'installation (201) ; et
un détecteur monté sur le bras en forme de L (202) ;
dans lequel la base d'installation (201) est disposée sur un côté de la station d'inspection (106) en éloignement de la station de stockage temporaire (107), et une portion verticale du bras en forme de L (202) est disposée sur un côté de la station d'inspection (106) proche de la station de stockage temporaire (107).

2. Installation portuaire, comprenant le système d'inspection de conteneur selon la revendication 1.

3. Procédé d'inspection de conteneur employant le système d'inspection de conteneur selon la revendication 1, comprenant les étapes consistant à :
lever et transporter, via le composant de levage (101) de la grue de quai (100), un premier conteneur (300) jusqu'à la plate-forme d'inspection (102) disposée sur la grue de quai (100) ;
détecter, via le capteur, si le premier conteneur (300) arrive à la plate-forme d'inspection (102); et
après détection que le premier conteneur (300) arrive à la plate-forme d'inspection (102), entraîner le dispositif d'inspection (200) disposé sur la plate-forme d'inspection (102) pour qu'il se déplace relativement au premier conteneur (300) pour effectuer une inspection par balayage sur le premier conteneur (300) arrivant à la plate-forme d'inspection (102).

4. Procédé d'inspection de conteneur selon la revendication 3, dans lequel,
avant le levage et le transport, via le composant de levage (101) d'une grue de quai (100), d'un premier conteneur (300) jusqu'à la plate-forme d'inspection (102) disposée sur la grue de quai (100), le procédé d'inspection de conteneur comprend en outre les étapes consistant à :
détecter si la plate-forme d'inspection (102) est vide ;
si oui, placer le premier conteneur (300) jusque sur la plate-forme d'inspection (102) ; et
si non, attendre que la plate-forme d'inspection (102) soit déterminée comme étant vide.

5. Procédé d'inspection de conteneur selon la revendication 3, dans lequel, après levage et transport, via le composant de levage (101) de la grue de quai (100), d'un premier conteneur (300) jusqu'à la plate-forme d'inspection (102) disposée sur la grue de quai (100), le procédé d'inspection de conteneur comprend en outre l'étape consistant à :
détacher le composant de levage (101) du premier conteneur (300), et pendant l'inspection par balayage sur le premier conteneur (300) via le dispositif d'inspection (200), lever et transporter un deuxième conteneur (300) via le composant de levage (101).

6. Procédé d'inspection de conteneur selon la revendication 3, dans lequel le levage et le transport, via le composant de levage (101) de la grue de quai (100), d'un premier conteneur (300) jusqu'à la plate-forme d'inspection (102) disposée sur la grue de quai (100) comprend de :
lever et transporter, via le composant de levage (101) de la grue de quai (100), le premier conteneur (300) jusqu'à la station d'inspection (106) de la plate-forme d'inspection (102) disposée sur la grue de quai (100) ;
la détection quant à savoir le premier conteneur (300) arrive à la plate-forme d'inspection (102) comprend de : détecter si le premier conteneur (300) arrive à la station d'inspection (106) ;
après détection selon laquelle le premier conteneur (300) arrive à la plate-forme d'inspection (102), l'entraînement du dispositif d'inspection (200) disposé sur la plate-forme d'inspection (102) pour qu'il se déplace relativement au premier conteneur (300) pour effectuer une inspection par balayage sur le premier conteneur (300) arrivant à la plate-forme d'inspection (102) comprend de : après détection selon laquelle le premier conteneur (300) arrive à la station d'inspection (106), entraîner le dispositif d'inspection (200) disposé sur la plate-forme d'inspection (102) pour qu'il se déplace relativement au premier conteneur (300) pour effectuer une inspection par balayage sur le premier conteneur (300) arrivant à la station d'inspection (106) ; et
le procédé d'inspection de conteneur comprend en outre l'étape consistant à :
après achèvement de l'inspection par balayage sur le premier conteneur (300), transférer le premier conteneur (300) depuis la station d'inspection (106) jusqu'à la station de stockage temporaire (107).

7. Procédé inspection de conteneur selon la revendication 6, dans lequel, après transfert du premier conteneur (300) depuis la station d'inspection (106) jusqu'à la station de stockage temporaire (107), le procédé d'inspection de conteneur comprend en outre les étapes consistant à :
placer, via le composant de levage (101), un deuxième conteneur (300) levé et transporté pendant l'inspection par balayage sur le premier conteneur (300) par le dispositif d'inspection (200), jusque sur la station d'inspection (106) ;
détecter si le deuxième conteneur (300) arrive à la station d'inspection (106) ; et
après détection selon laquelle le deuxième conteneur (300) arrive à la station d'inspection (106), entraîner le dispositif d'inspection (200) pour qu'il se déplace relativement au deuxième conteneur (300) pour effectuer une inspection par balayage sur le deuxième conteneur (300) arrivant à la station d'inspection (106).

8. Procédé d'inspection de conteneur selon la revendication 7, dans lequel,
après placement, via le composant de levage (101), d'un deuxième conteneur (300) levé et transporté pendant l'inspection par balayage sur le premier conteneur (300) par le dispositif d'inspection (200), jusque sur la station d'inspection (106), le procédé d'inspection de conteneur comprend en outre l'étape consistant à :
détacher le composant de levage (101) du deuxième conteneur (300), et pendant l'inspection par balayage sur le deuxième conteneur (300), lever et transporter, via le composant de levage (101), le premier conteneur (300) sur la station de stockage temporaire (107) jusqu'à une installation de transport de conteneur.

9. Procédé d'inspection de conteneur selon la revendication 8, dans lequel,
après levage et transport du premier conteneur (300) sur la station de stockage temporaire (107) jusqu'à une installation de transport de conteneur, le procédé d'inspection de conteneur comprend en outre l'étape consistant à :
lever, via le composant de levage (101), un troisième conteneur (300), et après achèvement de l'inspection par balayage sur le deuxième conteneur (300) et après transfert du deuxième conteneur (300) jusqu'à la station de stockage temporaire (107), placer le troisième conteneur (300) jusque sur la station d'inspection (106).

10. Procédé d'inspection de conteneur selon la revendication 3, dans lequel,
avant levage et transport, via le composant de levage (101) de la grue de quai (100), d'un premier conteneur (300) jusqu'à la plate-forme d'inspection (102) disposée sur la grue de quai (100), le procédé d'inspection de conteneur comprend en outre l'étape consistant à :
élever un mécanisme de guidage disposé sur la plate-forme inspection (102), pour guider le premier conteneur (300) et le faire tomber via le mécanisme de guidage pendant le placement du premier conteneur (300) jusque sur la plate-forme inspection (102).

11. Procédé d'inspection de conteneur selon la revendication 6, dans lequel,
avant transfert du premier conteneur (300) depuis la station d'inspection (106) jusqu'à la station de stockage temporaire (107), le procédé d'inspection de conteneur comprend en outre l'étape consistant à :
abaisser un mécanisme de guidage disposé sur la station d'inspection (106), pour permettre au premier conteneur (300) d'être translaté jusqu'à la station de stockage temporaire (107).

12. Procédé d'inspection de conteneur selon la revendication 7, dans lequel une direction de déplacement du dispositif d'inspection (200) pendant l'inspection par balayage sur le deuxième conteneur (300) est identique ou opposée à une direction de déplacement du dispositif d'inspection (200) pendant l'inspection par balayage sur le premier conteneur (300).
